## Europäisches Patentamt
## European Patent Office
## Office européen des brevets

(19)

(11) Veröffentlichungsnummer: **0 203 301**
**B1**

(12) **EUROPÄISCHE PATENTSCHRIFT**

(45) Veröffentlichungstag der Patentschrift: **25.07.90**

(21) Anmeldenummer: **86103967.5**

(22) Anmeldetag: **22.03.86**

(51) Int. Cl.⁵: **H 05 B 7/12,** F 27 D 11/10, H 05 B 7/06

(54) **Verfahren zum Betrieb eines Gleichstrom-Lichtbogenofens und Einrichtung zur Durchführung des Verfahrens.**

(30) Priorität: **29.04.85 DE 3515438**

(43) Veröffentlichungstag der Anmeldung:
**03.12.86 Patentblatt 86/49**

(45) Bekanntmachung des Hinweises auf die Patenterteilung:
**25.07.90 Patentblatt 90/30**

(84) Benannte Vertragsstaaten:
**AT BE CH DE FR GB IT LI LU SE**

(56) Entgegenhaltungen:
**EP-A-0 133 931**
**DE-C-3 106 741**

**Elektrowärme International, Edition B: Industrielle Elektrowärme, Juni Nr. 3/1983, Essen 1 Vulcan-Verlag Dr. W Classen, Haus der Technik, Seiten B124-B125**

(73) Patentinhaber: **MAN Gutehoffnungshütte Aktiengesellschaft**
**Bahnhofstrasse, 66 Postfach 11 02 40**
**D-4200 Oberhausen 11 (DE)**

(72) Erfinder: **Schubert, Manfred**
**Zum Brunsloh 12**
**D-4200 Oberhausen 11 (DE)**

EP 0 203 301 B1

## Beschreibung

Die Erfindung betrifft ein Verfahren zum Betrieb eines Lichtbogenofens mit Bodenelektrode gemäß dem Oberbegriff des Anspruchs 1, sowie eine Einrichtung zur Durchführung des Verfahrens.

Ein Gleichstrom-Lichtbogenofen der angegebenen Art ist bekannt aus der Zeitschrift "elektrowärme international" 41, (1983). Eine Kühleinrichtung für die Bodenelektrode eines solchen Ofens ist Gegenstand der DE-PS 31 06 741.

Beim Betrieb derartiger Öfen hat es sich gezeigt, daß die Standzeiten der Bodenelektrode nicht den Erwartungen entsprechen. Es zeigt sich, daß im Bereich der Bodenelektrode Risse im feuerfesten Material auftreten, in welche Schmelze eindringen kann. Es wurden deshalb verstärkte Anstrengungen unternommen, um die Gründe für die relativ geringen Standzeiten der Bodenelektrode festzustellen und nach Möglichkeit zu beseitigen.

Der Erfindung liegt die Aufgabe zugrunde, die Standzeiten der Bodenelektrode eines Gleichstrom-Lichtbogenofens zu verbessern.

Die erfindungsgemäße Lösung der Aufgabe beruht auf der überraschenden Erkenntnis, daß die für die geringen Standzeiten maßgeblichen Gründe nicht so sehr in den Verhältnissen während des Schmelz- und Abstichbetriebes, sondern wesentlich auch in den Verhältnissen während der regelmäßigen Betriebspausen, z.B. an den Wochenenden, zu suchen sind.

Die Aufgabe wird erfindungsgemäß mit dem im Anspruch 1 angegebenen Verfahren gelöst. Die Ansprüche 2 bis 4 betreffen vorteilhafte Ausgestaltungen des erfindungsgemäßen Verfahrens, und die Ansprüche 5 und 6 bevorzugte Einrichtungen zur Durchführung des Verfahrens.

Ein Ausführungsbeispiel der Erfindung wird anhand der Zeichnungen näher erläutert. Es zeigt:

Fig. 1 Die schematische Darstellung der Bodenelektrode eines Gleichstrom-Lichtbogenofens mit zugehörigen Kühl- und Regeleinrichtungen gemäß der Erfindung;

Fig. 2 typische Temperaturverläufe an der Bodenelektrode mit und ohne Anwendung des erfindungsgemäßen Verfahrens.

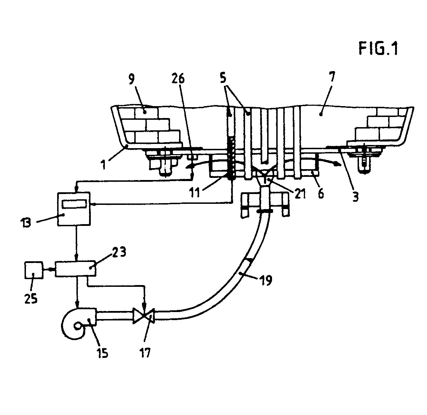

Fig. 1 zeigt im Schnitt den unteren Teil der metallischen Wandung 1 des Ofengefäßes, an welcher im Bodenbereich elektrisch isoliert eine Tragplatte 3 befestigt ist, welche eine Vielzahl von Elektroden- oder Kontaktstiften 5 trägt, die lotrecht durch die auf der Tragplatte 3 befindliche feuerfeste Stampfmasse 7 hindurchragen und die Schmelze (nicht gezeigt) kontaktieren. Im Bereich der Ofenwandung 1 ist eine feuerfeste Ausmauerung 9 angedeutet.

Einer, mehrere oder vorzugsweise alle Kontaktstifte sind mit einer Bohrung 11 versehen, in der ein (nicht dargestellter) Temperaturfühler z.B. in Form eines Thermoelementes angeordnet ist, um die Temperatur des Kontaktstiftes 5 zu messen. Die Temperaturfühler sind über entsprechende Leitungen mit einem Anzeige- und Überwachungsgerät 13 verbunden, das in entsprechender Entfernung vom Ofen z.B. im Leitstand angeordnet ist. Anhand der angezeigten bzw. überwachten Temperaturen kann der ordnungsgemäße Schmelzbetrieb überwacht und z.B. beim Auftreten von Gefahrensituationen unterbrochen werden. Ferner ergibt eine laufende Überwachung der Temperaturen der Kontaktstifte eine Anzeige darüber, wann der Verschleiß der feuerfesten Stampfmasse 7 soweit fortgeschritten ist, daß diese erneuert werden muß.

Im Abstand unterhalb der Tragplatte 3 befindet sich eine Basisplatte 6, und die Hälse der Elektroden- oder Kontaktstifte 5 ragen vorzugsweise bis durch die Basisplatte 6 hindurch. Der Zwischenraum zwischen Basisplatte 6 und Tragplatte 3, und damit auch die Hälse der Elektroden 5, sind mittels eines Luftstroms kühlbar, der von einem Gebläse 15 über ein regelbares Ventil 17 und eine flexible Zuleitung 19 zu einem Zuleitungsstutzen 21 in der Basisplatte 6 zugeführt wird.

An das Überwachungsgerät 13 ist ein Regelgerät 23 angeschlossen, welches in Abhängigkeit von von einem Programmgeber 25 zugeführten Sollwerten das Gebläse 15 steuert bzw. ein- und ausschaltet und/oder den Öffnungsquerschnitt des Ventils 17 steuert.

Für die Steuerung der Kühlleistung während einer Betriebspause, z.B. am Wochenende, sind folgende Kriterien hauptsächlich maßgeblich: Die Abkühlung des Ofens insgesamt soll möglichst gering sein, um die Energieverluste klein zu halten. Der Wärmegradient durch den Ofenboden im Bereich der Bodenelektrode soll möglichst gering gehalten werden, um die thermischen Spannungen zu begrenzen. Andererseits darf die Temperatur an der Außenseite der Bodenelektrode, die ggf. durch einen zusätzlichen Temperaturfühler 26 erfaßt werden kann, nicht über bestimmte Maximal- und Minimalwerte ansteigen bzw. abfallen. Schließlich sollen sich die Abkühlungen bzw. Erwärmungen der Bodenelektrode möglichst langsam abspielen, um thermische Schocks zu vermeiden. Unter Berücksichtigung dieser Parameter kann dem Regelgerät 23 über den Programmgeber 25 ein geeignetes Temperaturprofil vorgegeben werden, welches im Verlauf der Betriebspause eingehalten werden soll.

Abweichend von der Ausführungsform nach Fig. 1 können auch mehrere, unabhängig voneinander ein- und ausschaltbare Gebläse mit jeweils unabhängig voneinander regelbaren Drosselventilen vorgesehen werden.

Ein typischer, jedoch nur als Beispiel zu verstehender Steuerungsablauf während einer Betriebspause am Wochenende kann, bei Verwendung von zwei Gebläsen mit zugehörigen Ventilen, beispielsweise wie folgt durchgeführt werden: In einem ersten Intervall von 10-12 Stunden, beginnend mit dem letzten Abstich des Ofens, bleiben beide Gebläse eingeschaltet und ihre Ventile voll geöffnet. Nach Beendigung dieses Intervalls werden in einem zweiten Intervall, welches bis kurz vor dem Wiederanfahren des Ofens dauert, ein Gebläse abgeschaltet und das Ventil des anderen Gebläses so gesteuert, daß die Temperaturen der Elektroden- bzw. Kontaktstifte 5 in einem Bereich von 250-350°C gehalten werden. Unterschreitungen dieses Bereiches werden durch Abschalten auch des zweiten Gebläses, Überschreitungen durch Verstärken der Kühlleistung korrigiert. In einem dritten Intervall von etwa 1-2 Stunden nach dem Wiederzünden werden beide Gebläse betrieben und die Ventile allmählich von der teilweise geschlossenen in die offene Stellung gebracht, um einen langsamen Temperaturanstieg zu erzielen. Beim anschließenden Schmelzbetrieb werden beide Gebläse mit voller Leistung und mit offenen Ventilen betrieben.

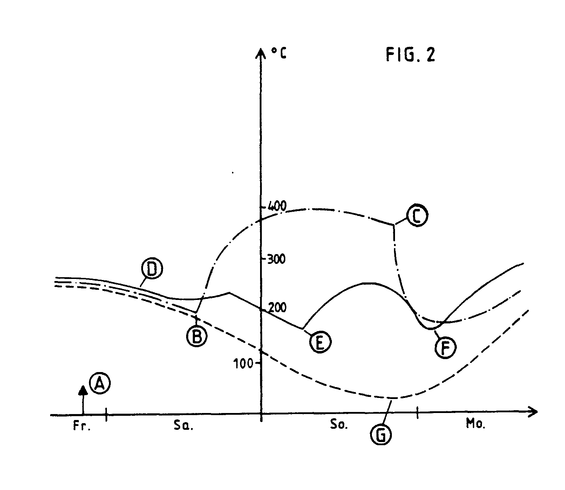

In Fig. 2 ist in durchgezogener Linie ein Temperaturverlauf bei Anwendung des erfindungsgemäßen Verfahrens im Vergleich zu den gestrichelt bzw. strichpunktiert dargestellten Varianten der bisher üblichen Betriebsweise dargestellt. Punkt A bezeichnet den Zeitpunkt des letzten Abstichs am Freitagabend. Wenn gemäß dem gestrichelten Verlauf beide Gebläse mit voll geöffneten Ventilen während der gesamten Wochenendpause in Betrieb bleiben, führt dies zu einer extremen Auskühlung der Bodenelektrode bei G. Um dies zu vermeiden, kann gemäß der strichpunktiert dargestellten Betriebsweise die Kühleinrichtung mit voller Leistung nur bis zu einem Zeitpunkt B weiterbetrieben und dann völlig abgestellt werden. Die in dem im Ofen verbliebenen Sumpf gespeicherte Wärme führt dann jedoch bei B zu einem steilen Temperaturanstieg an der Bodenelektrode auf eine deutlich über der normalen Arbeitstemperatur liegende Pausentemperatur, die erst allmählich wieder abfällt. Gegen Sonntagabend wird zum Zeitpunkt C die Kühleinrichtung wieder mit voller Leistung in Betrieb genommen, so daß ein steiler Temperaturabfall einsetzt, der erst mehrere Stunden nach Betriebsbeginn am Montagmorgen in die normale Arbeitstemperatur übergeht. Bei der erfindungsgemäßen Betriebsweise gemäß der durchgezogenen Linie wird wenige Stunden nach dem letzten Abstich bereits beim Zeitpunkt D ein Kühlbetrieb mit reduzierter Kühlleistung begonnen, der sich entweder über das ganze Wochenende oder, um eine zu starke Auskühlung des Ofens zu vermeiden, bis zu einem Zeitpunkt E z.B. am Sonntagvormittag fortsetzen kann. Wird dann die Kühleinrichtung ganz abgeschaltet, so erfolgt nur noch ein sehr mäßiger und langsamer Temperaturanstieg, und auch ein nicht so drastischer anschließender Abfall bis zum neuen Betriebsbeginn beim Punkt F.

Änderungen der beschriebenen Ausführungsform sind im Rahmen der Erfindung möglich. Beispielsweise kann das steuerbare Ventil 17 weggelassen werden, wenn stattdessen die Leistung des Gebläses 15 stufenlos geregelt wird.

Weiterhin ist es bei einer vereinfachten Ausführungsform der Erfindung möglich, die Regel- bzw. Steuereinrichtung 23 wegzulassen und das Gebläse 15 und/oder Ventil 17 manuell anhand der von der Überwachungseinrichtung 13 angezeigten Daten zu betätigen.

**Patentansprüche**

1. Verfahren zum Betrieb eines Lichtbogenofens mit Bodenelektrode, bei dem im Schmelz- und Abstichbetrieb die Bodenelektrode durch eine Kühleinrichtung gekühlt und dadurch bei einer konstanten oder sich nur langsam ändernden Arbeitstemperatur gehalten wird, dadurch gekennzeichnet, daß bei längeren Betriebspausen die Kühleinrichtung während mindestens eines Teils der Betriebspause mit reduzierter Kühlleistung betrieben wird, welche derart eingestellt oder gesteuert wird, daß die Geschwindigkeit der Temperaturänderung der Bodenelektrode insbesondere bei Beginn oder am Ende der Betriebspause vorgegebene Maximalwerte nicht übersteigt.

2. Verfahren nach Anspruch 1, dadurch gekennzeichnet, daß die Kühleinrichtung während des überwiegenden Teils der Betriebspause so eingestellt oder gesteuert wird, daß die Temperatur der Bodenelektrode innerhalb eines vorgegebenen Pausentemperaturbereiches gehalten wird.

3. Verfahren nach einem der Ansprüche 1 bis 2, dadurch gekennzeichnet, daß laufende Temperatur an einer oder mehreren Stellen der Bodenelektrode gemessen und die Kühlleistung in Abhängigkeit von der gemessenen Temperatur manuell gesteuert oder automatisch geregelt wird.

4. Verfahren nach Anspruch 2, dadurch gekennzeichnet, daß der Maximalwert der Pausentemperatur der Bodenelektrode nicht wesentlich über dem Maximalwert der zulässigen Arbeitstemperatur der an der Bodenelektrode eingesetzten Materialien liegt.

5. Einrichtung zur Durchführung des Verfahrens nach einem der Ansprüche 2 bis 3, mit einem Gleichstrom-Lichtbogenofen, der eine Kühleinrichtung zum Kühlen der Bodenelektrode und einen oder mehrere Temperaturfühler zum Überwachen der Temperatur der Bodenelektrode aufweist, dadurch gekennzeichnet, daß die Kühleinrichtung Steuerglieder (15, 17) zum Steuern der Kühlleistung aufweist und daß eine die Steuerglieder in Abhängigkeit von der überwachten Temperatur der Bodenelektrode (5) betätigende Steuereinrichtung (23) vorgesehen ist.

6. Einrichtung nach Anspruch 5, dadurch gekennzeichnet, daß die Steuereinrichtung (33) eine Sollwerte der Temperatur der Bodenelektrode (5) und/oder der Abkühl- und Aufheizgeschwindigkeit vorgebende Programmsteuereinrichtung (25) aufweist.

**Revendications**

1. Procédé pour le fonctionnement d'un four à arc avec une électrode de fond, procédé dans lequel pendant la fusion et la coulée l'électrode de fond est refroidie par un dispositif de refroidissement et est ainsi maintenue à une température de fonctionnement constante ou bien ne se modifiant que lentement, procédé caractérisé en ce que lors d'arrêts de fonctionnement importants, le dispositif de refroidissement fonctionne pendant au moins une partie de cet arrêt de fonctionnement avec une puissance de refroidissement réduite, cette puissance étant réglée ou commandée de façon que la vitesse de la modification de la température de l'électrode de fond, notamment au début ou bien à la fin de l'arrêt de fonctionnement, ne dépasse pas des valeurs maximales prédéfinies.

2. Procédé selon la revendication 1, caractérisé en ce que le dispositif de refroidissement est réglé ou commandé pendant la partie prépondérante de l'arrêt de fonctionnement, de façon que la température de l'électrode de fond soit maintenue à l'intérieur d'une étendue de température d'arrêt prédéfinie.

3. Procédé selon une des revendications 1 ou 2, caractérisé en ce que la température courante est mesurée en un ou plusieurs emplacements de l'électrode de fond et la puissance de refroidissement est commandée manuellement ou bien réglée automatiquement en fonction de la température ainsi mesurée.

4. Procédé selon la revendication 2, caractérisé en ce que la valeur maximale de la température d'arrêt de l'électrode de fond ne se situe pas notablement au-dessus de la valeur maximale de la température de fonctionnement admissible des matériaux mis en oeuvre contre l'électrode de fond.

5. Dispositif pour la mise en oeuvre du procédé selon une des revendications 2 à 3, avec un four à arc à courant continu qui comporte un dispositif de refroidissement pour refroidir l'électrode de fond et qui comporte un ou plusieurs détecteurs de température pour surveiller la température de l'électrode de fond, dispositif caractérisé en ce que le dispositif de refroidissement comporte des organes de commande (15, 17) pour commander la puissance de refroidissement et qu'il est prévu un dispositif de commande (23) actionnant les organes de commande en fonction de la température ainsi surveillée de l'électrode de fond (5).

6. Dispositif selon la revendication 5, caractérisé en ce que le dispositif de commande (23) comporte un dispositif de commande programmé prédéfinissant une valeur de consigne de la température de l'électrode de fond (5) et/ou la vitesse de refroidissement et de réchauffement.

**Claims**

1. Method of operating an arc furnace having a bottom electrode, in which, during melting and tapping operation, the bottom electrode is cooled by a cooling apparatus and is thereby kept at a constant or only slowly changing working temperature, characterized in that, during prolonged stoppages, the cooling apparatus, during at least part of the stoppage, is operated at reduced cooling capacity, which is set or controlled in such a way that the speed of the temperature change of the bottom electrode does not exceed predetermined maximum values, in particular at the start or end of the stoppage.

2. Method according to Claim 1, characterized in that the cooling apparatus, during the predominant part of the stoppage, is set or controlled in such a way that the temperature of the bottom electrode is kept within a predetermined stoppage temperature range.

3. Method according to either of Claims 1 to 2, characterized in that the continuous temperature is measured at one or more points of the bottom electrode, and the cooling capacity is manually controlled or automatically regulated as a function of the measured temperature.

4. Method according to Claim 2, characterized in that the maximum value of the stoppage temperature of the bottom electrode is not substantially above the maximum value of the permissible working temperature of the materials used at the bottom electrode.

5. Apparatus for performing the method according to one of Claims 2 to 3, comprising a direct current arc furnace which has a cooling apparatus for cooling the bottom electrode and one or more temperature sensors for monitoring the temperature of the bottom electrode, characterized in that the cooling apparatus has control members (15, 17) for controlling the cooling capacity, and in that a control device (23) actuating the control members as a function of the monitored temperature of the bottom electrode (5) is provided.

6. Apparatus according to Claim 5, characterized in that the control device (23) has a program control means (25) predetermining required values of the temperature of the bottom electrode (5) and/or of the cooling and heating rate.

FIG.1

FIG. 2